## Europäisches Patentamt
## European Patent Office
## Office européen des brevets

(11) Publication number: **0 078 673 B1**

(12) **EUROPEAN PATENT SPECIFICATION**

(45) Date of publication of patent specification: **13.12.89**

(51) Int. Cl.[4]: **G 11 B 11/10, G 02 F 1/09**

(21) Application number: **82305749.2**

(22) Date of filing: **28.10.82**

(54) **Magneto-optical head assembly.**

(30) Priority: **29.10.81 JP 173975/81**
**29.10.81 JP 173976/81**
**18.01.82 JP 6645/82**
**22.01.82 JP 9327/82**

(43) Date of publication of application:
**11.05.83 Bulletin 83/19**

(45) Publication of the grant of the patent:
**13.12.89 Bulletin 89/50**

(84) Designated Contracting States:
**DE FR GB IT**

(73) Proprietor: **SHARP KABUSHIKI KAISHA**
**22-22 Nagaike-cho Abeno-ku**
**Osaka 545 (JP)**

(72) Inventor: **Deguchi, Toshihisa Daiyahaitsu**
**Gakuenmae C-722**
**200-5 Gakuendaiwa-cho 2-chome**
**Nara-shi Nara-ken (JP)**
Inventor: **Ohta, Kenji**
**89-1 Futamata Yao-shi**
**Nara-ken (JP)**
Inventor: **Takahashi, Akira**
**1031-155 Higashitomigaoka 3-chome**
**Nara-shi Nara-ken (JP)**
Inventor: **Yamaoka, Hideyoshi**
**2-5-21 Amaminishi**
**Matsubara-shi Osaka-fu (JP)**

(74) Representative: **Wright, Peter David John et al**
**R.G.C. Jenkins & Co. 26 Caxton Street**
**London SW1H 0RJ (GB)**

(56) References cited:
FR-A-1 514 511      US-A-3 625 617
FR-A-2 476 892      US-A-3 651 281
NL-A-7 920 100      US-A-3 665 431
US-A-3 174 140      US-A-4 101 947
US-A-3 394 360      US-A-4 202 022
US-A-3 594 064

IBM TECHNICAL DISCLOSURE BULLETIN, vol.
23, no. 3, August 1980, pages 1200-1202,
Armonk, N.Y., US M.L. WORKMAN: "Optically
read and served direct-access storage device"

(56) References cited:
OPTICAL AND QUANTUM ELECTRONICS, vol. 7,
no. 6, November 1975, pages 493-504, Chapman
and Hall Ltd., London, GB M.A. MACHADO
GAMA: "System design considerations for
presision measurement of high magnetic fields
by Faraday effect"

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a magneto-optical head assembly for a refelction-type magneto-optical memory apparatus which uses a light beam for recording, retrieving, and erasing data.

In recent years active research and development activities have been directed to an apparatus using a vertically magnetized film as a memory medium, and using He—Ne lasers, Argon lasers, semiconductor lasers, and other similar types of lasers for optically recording, retrieving and erasing data. When this system is combined with magnetic disks, drums, tapes, and similar apparatus, it offers the major advantage of eliminating concern about the head becoming soiled from dust or other foreign material, or about crushing of the head, as compared with conventional magnetic heads which record, retrieve, and erase by means of a magnetic head whose tip can be positioned about 1 mm from the memory medium.

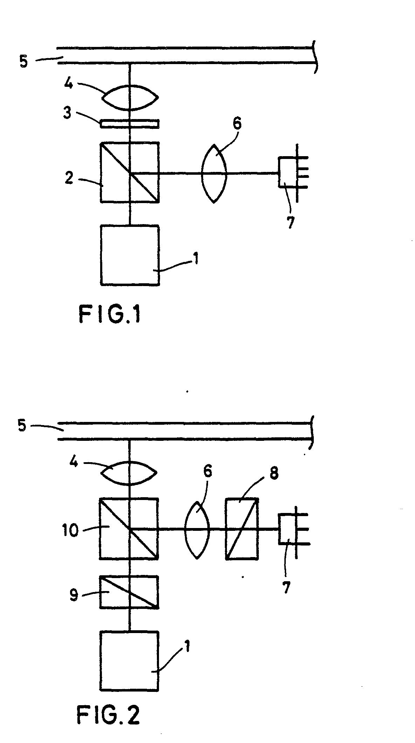

In the usual high density storage optical memory apparatus, the dimensions of the record bit are about 1 µm, and for this reason the optical beam must be squeezed into a minute spot, and at the same time the size of the light spot must be kept uniform, making a servo-system necessary to ensure accurate tracing of the abovementioned light spot. Fig. 1 shows an example of the basic configuration of the optical head section in a conventional apparatus using the diffraction effect of an optical beam to retrieve data from recorded data bits in a special retrieval optical type video disk. In this system there is a laser apparatus 1, a polarizing beam splitter 2, and 1/4 wave length plate 3, an object lens 4, and memory disk 5, a spot lens 6, and a light detection apparatus 7. The light detection apparatus 7 is constructed so as to produce a signal to control the position of the light spot, and also data signals.

It is possible for the abovementioned type of conventional optical head used for an optical type video disk to be used in practice as an optical head on a magneto-optic memory apparatus. An example of this is shown in Fig. 2. The optical elements which are equivalent to those shown in Fig. 1 carry the same reference numeral in Fig. 2 and in Fig. 1. The points which are different than those for video disk usage because of the different principles of data retrieval, are the providing of an analyzer 8 between the spot lens 6 and the light detection apparatus 7, the substitution of a polarizer 9 for the 1/4 wave length plate 3, and the substitution of a beam splitter 10 with a half mirror function in place of the polarized light beam splitter 2. However, the problem with this configuration is that in optical magnetic retrieving only a minute angle of rotation of the polarized light of the reflected data beam is caused and must be detected. In short, when obtaining a data signal, because the transmission axis of the analyzer 8 must be set close to right angles to the direction of the polarized light from the reflected data beam, the quantity of light reaching the light detection apparatus 7 is much smaller than in the case of the abovementioned optical type video disk. Because of this, it becomes extremely difficult to receive a sufficiently accurate control signal from the light detection apparatus 7 (focus error signal, tracking error signal).

NL—A—7920100 discloses an apparatus for detecting magneto-optical anisotropy of a magnetic medium by detecting the change in ellipticity of a non-linearly polarized laser beam upon relfection from the medium. To achieve this the reflected beam is subjected to complete separation into its P and S components. Separate detectors receive these separated components, and their outputs are processed to determine ellipticity of the reflected beam.

This prior art arrangement, however, does not address the aforementioned problem that the effect of rotation of the polarization by the medium is extremely small.

The present invention is directed to this problem, and seeks to provide effective enhancement of this polarization rotation.

According to the present invention there is provided a magneto-optical head assembly for a reflection type magneto-optical memory apparatus in which, in use, a polarized light beam originating from a laser leaves the said head assembly and is reflected back to the head assembly by a recording medium, the head assembly providing a light path to guide the reflected beam to a data sensor whereby magneto-optical rotation of the light beam relative to a predetermined polarization plane defined by the original beam polarization on reflection by the recording medium owing to magnetization of the recording medium is detected, and the position on the recording medium at which the light beam is reflected being controlled in use in response to the reflected beam, the head assembly having means to divide the said reflected beam, and to guide in use one part of the divided beam to the said data sensor and to guide in use another part of the divided beam to a control sensor the output of which is used in the said controlling of the position in the recording medium at which the light beam is reflected, the head assembly having a beam splitter in the path of the reflected beam from the recording medium to the data sensor, characterized in that said beam splitter has such deflection characteristics, and is so arranged that in the beam leaving the beam splitter towards the data sensor the magneto-optical rotation angle is increased with respect to the rotational angle caused by said magnetization of said recording medium without complete resolving by said beam splitter into the predetermined polarization plane and the plane orthogonal to the predetermined polarization plane, and in that optical analyzer means is provided in the path of said beam leaving the beam splitter and is oriented with its transmission plane oblique to the orthogonal plane of said beam leaving the beam splitter.

Embodiments of the invention will now be described by way of example with reference to the accompanying drawings in which:

Fig. 1 is a schematic drawing of an optical head for use with a conventional optical type video disk;

Fig. 2 is a schematic drawing of a conventional magneto-optical head;

Fig. 3 is a schematic drawing of a magneto-optical head in accordance with the present invention;

Fig. 4 is a data beam vector drawing;

Fig. 5 is a schematic drawing of another embodiment of a magneto-optic head in accordance with the present invention;

Fig. 6 is a schematic drawing of an image data record retrieval system which can use a magneto optical head of the present invention;

Fig. 7 is a side elevation showing the layered structure of a memory medium;

Fig. 8 is an explanatory drawing showing the retrieval principle of the magneto-optical head according to the present invention, and

Fig. 9 and Fig. 10 are wave form drawings showing one example of a data retrieval signal from the magneto-optical effect.

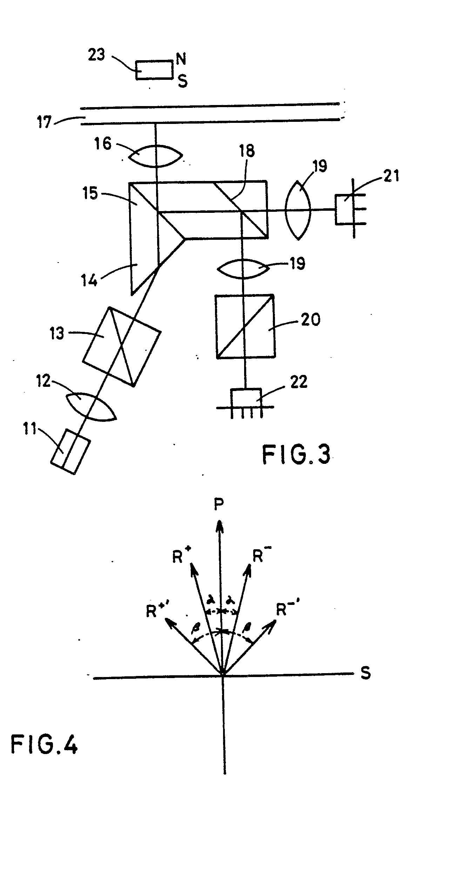

With reference first to Fig. 3, a semiconductor laser 11 capable of power modulation is emitted during recording, retrieval, and erasing, and in addition the system includes a condensing lens 12, a polarizer 13, a formed prism 14 which converts a laser beam of oval section to one of circular section, a beam splitter 15 which effectively transmits the light from the semiconductor laser 11 and enlarges the magneto-optical rotation angle of a beam reflected from a magneto-optical disk 17, an object lens 16, the optical magnetic disk 17, a beam splitter 18 which also enlarges the magneto-optical angle of rotation and divides the reflected beam to produce a control beam and a data beam, spot lenses 19 for condensing the light beams transmitted and reflected by the beam splitter 18, an analyzer 20, a light detection apparatus 21 for detecting the control beam and producing a control signal, and a light detection apparatus 22 for detecting the data beam and producing a data signal. In addition, there is provided a permanent magnet 23 which impresses a fixed magnetic field on the laser beam irradiation area during recording or erasing, and the magnetic field of the said permanent magnet 23 can be reversed by a drive mechanism, which is not shown on the drawing. The abovementioned object lens 16 is driven and controlled in the focus and tracking directions by means of a mechanism not shown in the drawings, and a control signal received from the abovementioned control signal light detection apparatus 21, and it also fixes the light spot in a set position.

Next, we will explain the optical action of the head mechanism of Fig. 3. Fig. 4 is a vector diagram of the data beam polarized conditions. The beam emitted from the semiconductor laser 11 shines upon the magneto-optical disk 17 with a polarization indicated by P. Then the beam is reflected from the said magneto optical disks 17 in accordance with the minute magnetized conditions of the magneto-optical disk 17, and as a result of the Kerr magneto-optical effect by the magnetic medium the angle of polarization is rotation +/− alpha to become $R^+$ or $R^-$. If the polarizing characteristics of the beam splitters 15 and 18 are considered to be $R_s > R_p$ (where $R_s$: s polarization energy reflection ratio; and $R_p$: p polarization energy reflection ratio), then the magneto-optical rotation angle for the polarized light impinging on the light detection apparatus 22 for data signals increases to beta by the enhancement of the beam splitters 15 and 18, whereby the polarization axis is rotated to $R^{+'}$ and $R^{-'}$. On the other hand the quantity of transmitted light transmitted to the control signal light detection apparatus 21 becomes Tp times almost that of the light reaching the beam splitter (where Tp: p polarized energy transmission ratio).

As an example, if the polarized light characteristics of the beam splitter 18 are $Rp = 0.4$, $R_s = 0,997$, $T_p = 0.6$, $T_s = 0.003$, the magneto-optical angle of rotation increases by a factor of about 1.5, and the control signal is produced using about 60% of the amount of light reflected on the detection system. As well as improving the quality of the resulting data signal, a high quality control signal is produced as a result of sufficient light being received by the control signal light detection apparatus 21. In addition, the effectiveness of the above arrangement can be emphasized even more by the use of an Avalance Photo Diode (APD), for detecton of faint light sources, in the data signal light detection apparatus 22.

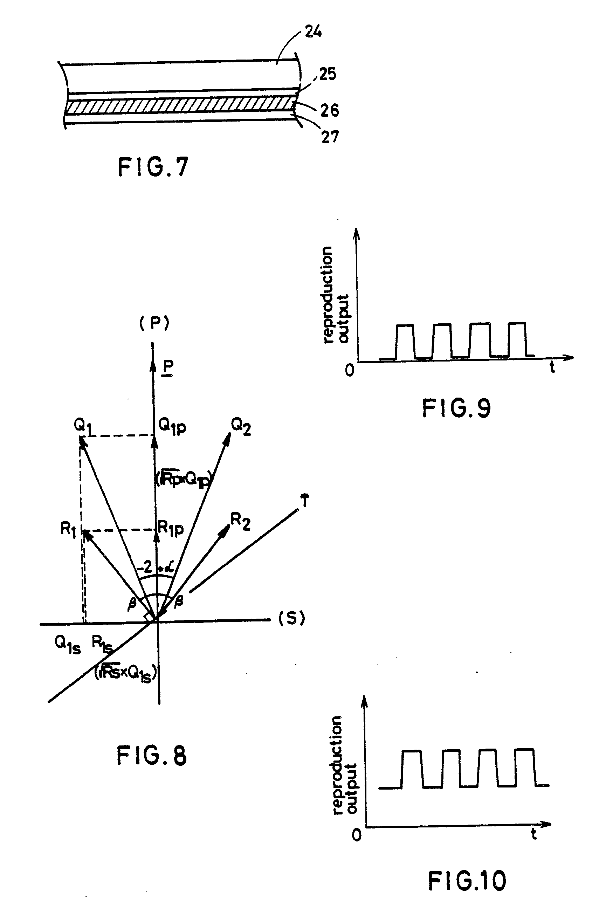

Using a magneto-optical head having the abovementioned basic characteristics is preferable for miniaturization of the apparatus so that the unit can easily achieve data recording and retrieval from commonly known techniques, and it is preferable that for the laser light source 1, a small output laser apparatus such as a semiconductor laser be used. Therefore, for the memory medium 17, rather than using crystalline magnetic materials with low recording sensistivity, such as MnBi, MnBiAl, and MnbiCu, rare earth metals with high recording sensitivity, such as Dd, Tb, Dy, Sm, etc. and transition metals such as Fe, Co, Ni, etc. are combined and non-crystalline magnetic materials such as TbDyFe, GdTbFe, GdDyFe, TbFe, etc. created and used. Nevertheless, in the abovementioned non-crystalline magnetic materials, the magneto-optical effect is weak as compared to the previously mentioned crystalline materials, and the so-called Kerr angle of rotation only reaches 0.1 deg, to 0.2 deg, and the S/N ratio of the retrieval signal is low and furthermore it is difficult to set accurately the declination of the abovementioned analyzer 20. For this reason, effort is being made to achieve an increase in the Kerr angle of rotation by improving the memory element construction, as shown in Fig. 7.

In Fig. 7, a substrate 24 is made from glass or acrylic resin, and a reflection film 25 is formed from a thin film of metal, such as Al, Au, or Cu, and furthermore the medium includes a previously mentioned non-crystalline magnetic material 26, and a thin membrane of a transparent dielectric of $SiO_2$, SiO, these films being laminated by the evaporation method or sputtering method. The thickness of the respective films determines their suitability for increasing the Kerr angle of rotation through the interference characteristics of the thin films.

The beam splitter, which is an essential component of the reflection type magneto-optical head, has special polarization characteristics which emphasise the magneto-optical effect by increasing the kerr angle of rotation of the reflected laser beam from the medium to ·the beam splitter, these characteristics being determined by the thin-film dielectric body which is applied as a multi-layer coating. In addition to improvement in the S/N ratio in the derived signal, the arrangement makes the azimuth of the detection analyzer easily established. In particular, on the inclinded surface of the prism of the beam splitter 15 and 18, the energy transmission factor of the P polarization, $T_p$ is $1 > T_p > 0.5$, and the energy reflection factor $R_s$ of the s polarization is $1 > R_s > 0.5$, and this type of optical characteristic resulting from the multiple coatings of the thin film dielectric body is very desirable.

This method is especially effective in the case of the data retrieval operation, and the retrieval method is explained as follows.

The laser beam emitted from the semiconductor laser 11 is collimated by the condensing lens 12, passes through the polarizer 13 which has a fixed azimuth, and as is shown in Fig. 8, becomes a linearly polarized light beam (P wave) oscillating in the direction of the arrow P on the surface of the paper. The said linearly polarized light beam passes through the beam splitter 15, which has a multilayered thin film dielectric body coated on the inclined surface of its prism, and which thereby is provided with polarizing characteristics such that $R_s > R_p$ (where $R_s$:s wave energy reflection factor; $R_p$: p wave energy reflection factor). Because, as previously stated the incident light is polarized in the P plane, the polarizing conditions are maintained, and the transmission energy determined by $T_p$ (where $T_p$: the p wave energy transmission factor of the beam splitter 18) becomes Tp times the incident energy. Next, the objective lens 16 causes the polarized laser beam to shine a spot on the memory medium 17, which is already functioning as a magnetic memory. Then, the polarized light laser beam striking the abovementioned spotlighted point receives a known magneto-optical effect according to the magnetic condition of the illuminated point, namely the so-called Kerr effect, and the reflected beam has its polarization rotated through the Kerr angle of rotation, alpha. In other words, as indicated in Fig. 8, in the regions of magnetic recording the reflected polarization angle becomes + alpha relative to the incident polarized light P, while in the unchanged initial magnetic regions it becomes − alpha. Thus in both regions the reflected laser beams $Q_1$ and $Q_2$ have their planes of polarization rotated. The reflected laser beam re-enters the beam splitter 15 and next enters the beam splitter 18, and, from the effect of the previously stated polarized light characteristics of beam splitters 15 and 18, the rotation angle, beta, of the plane of polarization of the laser beam reflected on the light detecting apparatus side becomes larger than alpha, as represented by $R_1$ and $R_2$. Therefore, if the transmission axis of the analyzer 20 is set to T, as shown in Fig. 8, then when the said magneto-optical head scans a part of the medium 17 recorded in a pulsed fashion, as shown in Fig. 9, a pulsed data signal is received. However, in actual practice, as a result of the opto-magnetic characteristics of the recording medium 17, the reflected laser beams $Q_1$ and $Q_2$ in Fig. 8 become slightly elliptically polarized. Furthermore, by the effect of the beam splitters 15 and 18, which has a phase difference between the reflected S wave and P wave, the polarized light reaching the analyzer 20 becomes slightly ellipitically polarized, and, because of this phenomenon, the signal output becomes as illustrated in Fig. 10.

The present invention is not limited to the embodiment shown in Fig. 3, and it is possible to omit the polarizer 13 and the formed prism 14.

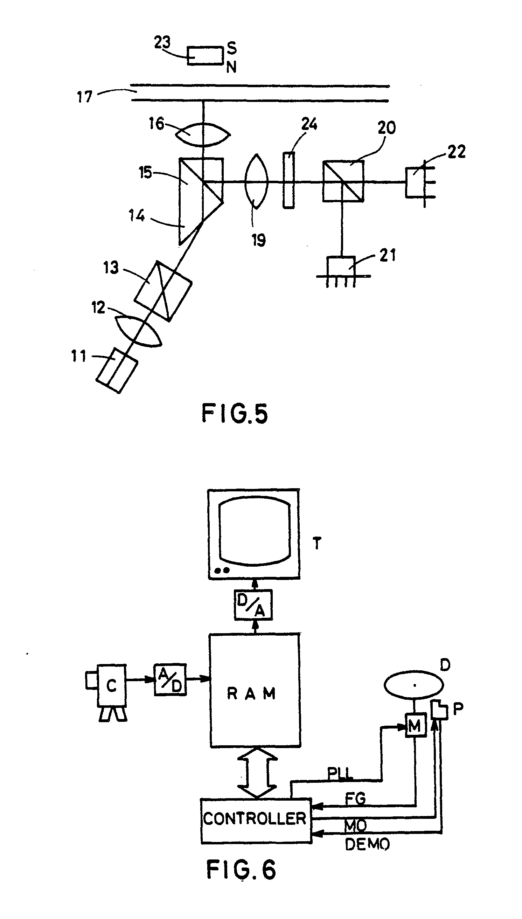

With reference now to Fig. 5, components which in this embodiment are the same as that of Fig. 3 are numbered in the same way. From this configuration, it is possible to use the reflected light of an analyzer 20 as the control signal in conventional magneto-optical retrieval, and along with obtaining a reduction in parts used in the construction, the light intensity of the control signal beam becomes stronger, and a high quality control signal is obtained. A half-wavelength plate 24, when a data beam is detected, causes the analyzer 20 to rotate, and when this happens the arrangement is such that it makes it unnecessary for the light detection apparatus 21 (for detecting the control signal) to rotate in the same way, and the polarized light entering the light detection apparatus can be set at will. In this configuration, it is acceptable to position the data signal light detection apparatus 22 on the light reflection side of the analyzer 20, and the control signal light detection apparatus 21 on the transmission side. The polarizing beam splitter 15, having the polarizing characteristics as described above with reference to the Fig. 3 embodiment, has the same effect, ie. to increase the Kerr rotation angle.

Next, we will explain a recording and retrieval system for image data, using a magnetic disk and the magneto-optical head according to the present invention. Fig. 6 illustrates the configuration of this system. A black and white television camera is used to enter black and white image data. The field signal of a camera C converted one frame at a time in the A/D converter is stored in a frame memory RAM. The resolution is 512 pixels per line (Sanbring wavelength about 10 MHz), 480 lines per frame, and the gradation is 8 bits per pixel as input to the frame memory RAM. The data stored in this frame memory RAM is modulated by the MFM method, with a quartz radiator clock synchronous in the x-direction of the television screen, and using a clock from a frequency generator FG which is directly connected to a disk drive motor M, synchronous in the y-direction. From this signal, the semiconductor laser of the optical head P is modulated directly and records data on the opto-magnetic head P depend on a track servo based on a focus servo and convex/concave guide track.

At the same time, the signal retrieved with the optical head P is demodulated by MFM, and the demodulated signal is stored in the frame memory RAM. The data stored in this frame memory RAM is continuously and repeatedly read out, converted from digital to analogue on the D/A convertor, and displayed on the television monitor. Retrieval of image data is carried out using the above method.

The storing and retrieval of image data by the system so described, carried out positively through the frame memory RAM, is not accomplished at high speed with the opto-magnetic disk, so it is used as a frequency converter.

## Claims

1. A magneto-optical head assembly for a reflection type magneto-optical memory apparatus in which, in use, a polarized light beam originating from a laser (11) leaves the said head assembly and is reflected back to the head assembly by a recording medium (17), the head assembly providing a light path to guide the reflected beam to a data sensor (22) whereby magneto-optical rotation of the light beam relative to a predetermined polarization plane (P) defined by the original beam polarization on reflection by the recording medium (17) owing to magnetization of the recording medium (17) is detected, and the position on the recording medium (17) at which the light beam is reflected being controlled in use in response to the reflected beam, the head assembly having means (18 in Fig. 3; 20 in Fig. 5) to divide the said reflected beam, and to guide in use one part of the divided beam to the said data sensor (22) and to guide in use another part of the divided beam to a control sensor (21) the output of which is used in the said controlling of the position on the recording medium (17) at which the light beam is reflected, the head assembly having a beam splitter (15 and 18 in Fig. 3; 15 in Fig. 5) in the path of the reflected beam from the recording medium to the data sensor, characterised in that said beam splitter has such deflection characteristics, and is so arranged that in the beam leaving the beam splitter (15 and 18) towards the data sensor (22) with magneto-optical rotation angle is increased with respect to the rotational angle caused by said magnetization of said recording medium without complete resolving by said beam splitter into the predetermined polarization plane (P) and the plane (S) orthogonal to the predetermined polarization plane (P), and in that optical analyser means (20) is provided in the path of said beam leaving the beam splitter and is oriented with its transmission plane (T) oblique to the orthogonal plane (S) of said beam leaving the beam splitter.

2. A magneto-optic head assembly according to claim 1 characterised in that said optical analyzer means is oriented with its transmission plane substantially perpendicular to a plane of polarization of that beam for one or two predetermined states of magnetization of the recording medium.

3. A magneto-optic head assembly according to claim 2, characterised in that the beam directed onto said recording medium is plane polarized in the predetermined polarization plane (P).

4. A magneto-optical head assembly according to any preceding claim in which the said means (18) to divide the reflected beam is the said beam splitter (18), the other beam leaving the beam splitter being guided to the said control sensor (21).

5. A magneto-optical head assembly according to any preceding claim in which a multicoated thin film dielectric body on the light incident surface of the said beam splitter provides the said deflection characteristics.

6. A magneto-optical head assembly according to any preceding claim in which the light incident surface of the beam splitter has an energy transmission factor Tp for light polarized in the P plane of $1 > Tp > 0.5$ and an energy reflection factor $R_s$ for light polarized in the S plane of $1 > R_s > 0.5$.

## Patentansprüche

1. Magneto-optische Kopfanordnung für ein magneto-optisches Speichergerät des Reflexionstyps, bei dem während der Benutzung ein von einem Laser (11) erzeugter Lichtstrahl aus der Kopfanordnung austritt und nach Reflexion an einem Aufzeichnungsmedium (17) wieder in die Kopfanordnung eintritt, die einen geführten Lichtweg für den reflektierten Strahl zu einem Datensensor (22) bildet, um die durch die Reflexion an dem Aufzeichnungsmedium (17) aufgrund von dessen Magnetisierung auftretende magneto-optische Drehung des Lichtstrahls relativ zur durch die ursprüngliche Strahlpolarisation bestimmten Polarisationsebene (P) festzustellen, bei dem während der Benutzung der Reflexionspunkt für den Lichtstrahl auf dem Aufzeichnungsmedium (17) in Abhängigkeit vom reflektierten Strahl nachgestellt wird, und bei dem die Kopfanordnung Vorrichtungen (18 in Fig. 3; 20 in Fig. 5) aufweist zur Aufteilung des reflektierten Strahls, zur Führung eines Teilstrahls zum Datensensor (22) und zur Führung eines anderen Teilstrahls zu einem Steuersensor (21), dessen Ausgang zur Nachstellung des Reflexionspunktes auf dem Aufzeichnungsmedium (17) verwendet wird, und bei dem die Kopfanordnung des weiteren einen Strahlteiler (15 und 18 in Fig. 3; 15 in Fig. 5) im Weg des reflektierten Strahls vom Aufzeichnungsmedium zum Datensensor aufweist, dadurch gekennzeichnet, daß der Strahlteiler hinsichtlich Strahlenablenkung und Anordnung so gewählt ist, daß der magneto-optische Drehwinkel des aus dem Strahlteiler (15 und 18) in Richtung auf den Datensensor (22) austretenden Strahls bezüglich des durch die Magnetisierung des Aufzeichnungsmediums verursachten Drehwinkels vergrößert wird, jedoch ohne vollständige Zerlegung in die vorgegebene Polarisationsebene (P) und die dazu orthogonal Ebene (S), und daß ein optischer Analysator (20) innerhalb des Strahlengangs des aus dem Strahlteiler austretenden Strahls mit schräg zur orthogonalen Ebene (S) des Strahls liegender Transmissionsebene (T) vorhanden ist.

2. Magneto-optische Kopfanordnung nach Anspruch 1, dadurch gekennzeichnet, daß der optische Analysator mit seiner Transmissionsebene im wesentlichen senkrecht zu einer Polarisationsebene desjenigen Strahls orientiert ist, der aus einem von zwei bestimmten Magnetisierungszuständen des Aufzeichnungsmediums resultiert.

3. Magneto-optische Kopfanordnung nach Anspruch 2, dadurch gekennzeichnet, daß der auf das Aufzeichnungsmedium gerichtete Strahl in der festgelegten Polarisationsebene (P) linear polarisiert ist.

4. Magneto-optische Kopfanordnung nach einem der vorstehenden Ansprüche, bei der die Vorrichtung (18) zur Aufteilung des reflektierten Strahls der Strahlteiler (18) ist und bei der der andere aus dem Strahlteiler austretende Strahl zum Steuersensor (21) geleitet wird.

5. Magneto-optische Kopfanordnung nach einem der vorstehenden Ansprüche, in welcher ein mehrlagiges Dünnfilm-Dielektrikum auf der Strahlauftrefffläche des Strahlteilers die Ablenkungscharakteristika bewirkt.

6. Magneto-optische Kopfanordnung nach einem der vorstehenden Ansprüche, bei der die Oberfläche des Strahlteilers, auf die das Licht auftrifft, einen Energietransmissionsfaktor Tp für in der P-Ebene polarisiertes Licht von $1 > TP > 0,5$ und einen Energiereflexionsfaktor Rs für in der S-Ebene polarisiertes Licht von $1 > Rs > 0,5$ aufweist.

**Revendications**

1. Ensemble de tête magnéto-optique pour un dispositif de mémoire magnéto-optique du type à réflexion, dans lequel, en fonctionnement, un faisceau de lumière polarisée délivré par un laser (11) quitte ledit ensemble de tête et est renvoyé par réflexion à cet ensemble par un support d'enregistrement (17), l'ensemble de tête fournissant un trajet de la lumière servant à guider le faisceau réfléchi en direction d'un capteur de données (22), et dans lequel une rotation magnéto-optique du faisceau de lumière par rapport à un plan de polarisation prédéterminée (P) défini par la polarisation initiale du faisceau lors de la réflexion sur le support d'enregistrement (17) compte tenu de l'aimantation de ce dernier, est détectée, et la position sur le support d'enregistrement (17), dans laquelle le faisceau de lumière est réfléchi, est commandée en fonctionnement en réponse au faisceau réfléchi, l'ensemble de tête comportant des moyens (18 sur la figure 3; 20 sur la figure 5) pour diviser ledit faisceau réfléchi et guider, en fonctionnement, une partie du faisceau divisé en direction dudit capteur de données (22) et guider, en fonctionnement, une autre partie du faisceau divisé en direction d'un capteur de commande (21), dont le signal de sortie est utilisé pour réaliser ladite commande de la position sur le support d'enregistrement (17), au niveau de laquelle le faisceau de lumière est réfléchi, l'ensemble de tête comportant un diviseur de faisceau (15 et 18 sur la figure 3; 15 sur la figure 5) situé dans le trajet du faisceau réfléchi du support d'enregistrement en direction du capteur de données, caractérisé en ce que ledit diviseur de faisceau présente des caractéristique de déviation telles et est agencé de telle sorte que dans le faisceau quittant le diviseur de faisceau (15 et 18) en direction du capteur de données (22), l'angle de rotation magnéto-optique augmente par rapport à l'angle de rotation provoqué par ladite aimantation dudit support d'enregistrement, sans qu'une division complète soit exécutée par ledit diviseur de faisceau entre le plan de polarisation prédéterminé (P) et le plan (S) perpendiculaire au plan de polarisation prédéterminé (P), et en ce que des moyens (20) formant analyseur optique sont prévus dans le trajet dudit faisceau quittant le diviseur de faisceau et sont orientés de telle sorte que leurs plans de transmission (T) est oblique au plan orthogonal (S) dudit faisceau quittant le diviseur de faisceau.

2. Ensemble de tête magnéto-optique selon la revendication 1, caractérisé en ce que lesdits moyens formant analyseur optique sont orientés de telle sorte que leur plan de transmission sont sensiblement perpendiculaires à un plan de polarisation de ce faisceau pour l'un de deux états prédéterminés d'aimantation du support d'enregistrement.

3. Ensemble de tête magnéto-optique selon la revendication 2, caractérisé en ce que le faisceau dirigé sur ledit support d'enregistrement est polarisé à plat dans le plan de polarisation prédéterminé (P).

4. Ensemble de tête magnéto-optique selon l'une quelconque des revendications précédentes, dans lequel lesdits moyens (18) servant à diviser le faisceau réfléchi sont constitués par ledit diviseur de faisceau (18), l'autre faisceau, qui quitte le diviseur de faisceau, étant guidé en direction dudit capteur de commande (21).

5. Ensemble de tête magnéto-optique selon l'une quelconque des revendications précédentes, dans lequel un corps diélectrique formé d'une couche mince portant de multiples revêtements et située sur la surface d'incidence de la lumière dudit diviseur de faisceau fournit lesdits caractéristiques de déviation.

6. Ensemble de tête magnéto-optique selon l'une quelconque des revendications précédentes, dans lequel la surface d'incidence de la lumière du diviseur de faisceau possède un facteur de transmission d'energie Tp pour la lumière polarisée dans le plan P, tel que $1 > Tp > 0,5$ et un facteur de réflexion d'énergie $R_s$ pour la lumière polarisée dans le plan S, tel que $1 > R_s > 0,5$.

**FIG.1**

**FIG.2**

FIG.3

FIG.4

FIG.5

FIG.6

3

FIG. 7

FIG. 8

FIG. 9

FIG. 10